# EUROPEAN PATENT APPLICATION

(11) **EP 2 487 985 A1**
(43) Date of publication of application: **15.08.2012**
(21) Application number: 11290078.2
(22) Date of filing: 09.02.2011
(51) Int. Cl.: H04W 76/02

(54) **Apparatuses and methods for transmission of a radio coverage request**

(71) Applicant: Alcatel Lucent, 75007 Paris (FR)
(72) Inventor: Wild, Thorsten, 70435 Stuttgart (DE)
(74) Representative: Dreiss

(57) **Abstract**

The invention relates to a terminal (MS) for a cellular communications network, wherein said terminal (MS) is configured to establish a communications connection with a base station (BS0) of said cellular communications network by transmitting an access request (ar) to said base station (BS0). Said terminal (MS) is further configured to transmit (210) a coverage request (cr) which indicates that said terminal (MS) requires radio coverage to be established at its current and/or an estimated future position by a base station (BS0) of said cellular communications network.

## Description

### Field of the invention

The present invention relates to a terminal for a cellular communications network, wherein said terminal is configured to establish a communications connection with a base station of said cellular communications network by transmitting an access request to said base station.

The invention further relates to a method of operating such a terminal.

Still further, the present invention relates to a base station of a cellular communications network and a method of operating a base station.

### Background

In cellular communications networks such as e.g. according to the GSM and/or UMTS and/or LTE standard, a terminal may initiate a communications connection with a base station by transmitting an access request to the base station, wherein the access request indicates to the base station that said terminal desires to join the radio cell provided by the base station. Prior to transmitting said access request, within conventional communications networks, the terminal usually scans one or more possible downlink frequency bands for synchronisation information that is transmitted by a base station for synchronization purposes. However, if the terminal cannot determine any synchronisation information, which may e.g. be due to a poor signal to noise (plus interference) ratio, digital communications with the base station cannot be established. In such cases, the terminal may not even transmit an access request, because it could not obtain any synchronisation information.

Accordingly, it is an object of the present invention to provide an improved terminal and an improved method of operating a terminal which provide an increased operational flexibility regarding the initiation of data communications with the base station by a terminal.

### Summary

Regarding the terminal, this object is achieved in that said terminal is further configured to transmit a coverage request which indicates that said terminal requires radio coverage to be established at its current and/or an estimated future position by a base station of said cellular communications network.

The inventive coverage request advantageously enables a terminal to request from the cellular communications network infrastructure, particularly from specific base stations that receive the coverage request, an alteration of the radio coverage provided by said base stations with the effect that certain areas, which are currently not provided with (sufficient) radio coverage by the base stations, will be provided with adequate radio coverage in response to said coverage request.

According to an embodiment, the application of the coverage request is not limited to a single, specific communications network. I.e., if the terminal is currently positioned in an area in which no radio coverage of its preferred communications network is provided, and if even its coverage request cannot be received by any base station of its preferred network, either, it is possible that a base station of a further communications network receives and evaluates the coverage request. After that, this base station of the further communications network may notify (e.g., via a backhaul link) an entity of the terminal's preferred network on the coverage request, and the preferred network may take adequate measures such as activating and/or increasing a cell size of a base station which is supposed to be able to provide coverage for the requesting terminal. However, a network entity of the further network may alternatively or additionally also take measures to provide radio coverage for the requesting terminal.

According to a preferred embodiment, the terminal is configured to apply at least one of the following measures to the coverage request:
- use a higher transmit power as compared to the access request, particularly a maximum transmit power, which is e.g. supported by the terminal's hardware,
- use lower code rates as compared to the access request, particularly by extending existing mother codes by repetition coding,
- use a higher degree of spreading as compared to the access request,
- limit the coverage request to a comparatively small bandwidth, preferably a smaller bandwidth as compared to the access request, in order to increase the power spectral density,
- stretch the coverage request in time, as compared to the access request, particularly by distributing said coverage request to a plurality of subsequent transmission time intervals (tti).

The aforementioned measures may be applied individually or in combination with each other by the terminal according to the embodiments in order to increase the chances that a base station or any other network element which is configured to evaluate coverage requests according to the embodiments actually will pick up a coverage request issued by the terminal. The specific configuration of parameters related to the coverage request advantageously enables to reach such base stations of the cellular communications network (or any other network) from the terminal, which are usually too far away for a regular communications connection. For example, the terminal according to the embodiments may be located at a specific distance with respect to a first base station of said communications network such that the terminal according to the embodiments does not receive any synchronisation information from the first base station. I.e., there is no sufficient radio coverage at the current position of the terminal. However, according to the specific design of the coverage request according to the embodiments, a coverage request issued by the terminal may eventually be received by said first base station, which would trigger the first base station to modify its own coverage area and/or notify further base stations which are located in the area of the terminal, whereby radio coverage might eventually be established at the current position of the terminal.

Particularly, the inventive coverage request is different from the conventional access requests as used for contacting a base station upon receiving its synchronization information in that one or more signal parameters of the coverage request are altered with the purpose to increase the "perceptibility" of said coverage request. Thus, even if the terminal according to the embodiments cannot receive sufficient downlink synchronisation information from any base station, there is a nonvanishing probability that a distant base station may eventually pick up the coverage request and may, upon evaluating said coverage request, initiate further steps that aim at (re-)establishing radio coverage at the requesting terminal's position.

According to a further embodiment, said terminal is configured to include information in said coverage request which enables a receiver of said coverage request to distinguish said coverage request from a coverage request and/or further signals of other devices. Such information could e.g. comprise a unique identifier such as an IMSI (International Mobile Subscriber Identity). Other forms of user-specific and/or terminal-specific information may also be provided within the inventive coverage request. Although the terminal-specific information may generally be provided explicitly by adding respective information (e.g. an identifier such as a user equipment ID) to the coverage request, terminal-specific or user-specific information may also be provided implicitly, e.g. by employing user-specific and/or terminal-specific scrambling codes or spreading codes to modify the information comprised within the coverage request.

According to a further embodiment, said terminal is configured to include location-based information, preferably information on a current position of said terminal, in said coverage request, which might be obtained by the terminal in a per se known manner, i.e. by employing a global positioning system (GPS) or the like.

According to a further advantageous embodiment, said terminal is configured to use a multiple of a sample rate supported by the communications network that is supposed to process said coverage request for generating said coverage request, which also increases the chances for said coverage request to be properly recognized by the specific communications network.

According to a further advantageous embodiment, said terminal is configured to transmit said-coverage request if it determines that no, or at least no sufficient, radio coverage is provided for the terminal. I.e., whenever the terminal according to the embodiments tries to initiate a data communication by scanning for appropriate downlink synchronisation information of a supposed neighbouring base station without success, it may resort to issuing the inventive coverage request in order to reach a base station which is too far away for a conventional access procedure using the access request according to the established mobile communications standards. Upon receiving the inventive coverage request, such base station could wake up further base stations which are located in the neighbourhood of the mobile terminal. This advantageously enables to apply comparatively aggressive energy saving schemes to cellular communications networks which inter alia provide for deactivating specific base stations or at least components thereof.

Generally, a receiver for receiving the coverage request according to the embodiments could e.g. use the following approach: After receiving, downconversion to an intermediate or baseband frequency range and subsequent A/D (analog to digital) conversion of the received signal, a so obtained digital baseband signal and time-frequency shifted representations of it may be passed through a correlation receiver, which uses e.g. threshold detection in order to detect the coverage request signal.

Alternatively or in addition, the terminal according to the embodiments may also issue a coverage request upon request of a user of said terminal, which might e.g. be performed in case of emergency, where it is important for the user to immediately notify a central office and/or a rescue center or the like of the emergency.

A further solution to the object of the present invention is given by a method of operating a terminal according to claim 7. The inventive method proposes that said terminal transmits the coverage request which indicates that said terminal requires radio coverage to be established at its current and/or an estimated future position by a base station of said cellular communications network. As already explained above, the coverage request may also indicate that said terminal requires radio coverage to be established at its current and/or an estimated future position by an arbitrary base station, i.e. which does not necessarily belong to a preferred cellular communications network of said terminal.

A further solution to the object of the present invention is given by a base station of a cellular communications network according to claim 9. The base station is configured to receive a coverage request from a terminal which indicates that said terminal requires radio coverage to be established at its current and/or an estimated future position by a base station of said cellular communications network.

According to a further embodiment, said base station is configured to wake up-and/or notify further base stations of the coverage request. Again, this procedure is not limited to network entities (e.g., base stations) of the same network the terminal belongs to. I.e., base stations of other networks may also be notified and/or triggered to establish radio coverage at a position related to the requesting terminal and/or an estimated future position specified by the terminal or derivable from the coverage request.

Generally, the inventive concept advantageously enables one or more cellular communications networks to dynamically trigger certain base stations to assume a sleep mode or a kind of "idle mode", wherein certain systems of the base stations such as an RF (Radio Frequency) front-end are shut down to save electrical energy. Such base stations in principle are not able to provide radio coverage around their respective locations for terminals while in sleep mode. However, if a terminal according to the embodiments issues a coverage request, it may notify further base stations, which are not yet powered down, of the desired radio coverage of the terminal, and subsequently, said further base stations could trigger the sleeping base stations to wake up again and to provide adequate radio coverage in the area of the terminal. Of course, this principle is applicable across network and/or technology boundaries, too. I.e., a base station of a first network may receive a coverage request from a terminal according to the embodiments, and said base station may forward said coverage request to another base station of a further network, which may e.g. operate according to another communications standard, and which may process the coverage request and take the necessary measures for establishing the requested radio coverage.

According to an advantageous embodiment, the base station is configured to determine at least one further base station to be waked up and/or notified of the coverage request depending on location-based information comprised within said coverage request. Generally, a base station that has received a coverage request according to the embodiments may notify further base stations, i.e. in the sense of waking up, via a backhaul network that is interconnecting the base stations of a cellular communications network.

However, in order to avoid waking up base stations which could not provide adequate radio coverage for the requesting terminal, a base station, after receiving a coverage request, may advantageously determine, or at least estimate, a position of the requesting terminal, i.e. based on the location-based information comprised within the coverage request, in order to be able to determine those base stations to be waked up which offer the best chances to provide adequate radio coverage for the requesting terminal.

According to a further advantageous embodiment, said base station is configured to perform an estimation of a direction of arrival (doa) of said coverage request, which may e.g. be done by employing an antenna array provided at the base station.

A further solution of the object of the present invention is given by a method of operating a base station according to claim 13. Advantageous embodiments are provided by the dependent claims.

### Brief description of the figures

Further aspects, features and embodiments of the present invention are given in the following detailed description with reference to the drawings, in which:
Figure 1 depicts a communications scenario according to an embodiment, and
Figure 2 depicts a simplified flow chart of a method according to an embodiment.

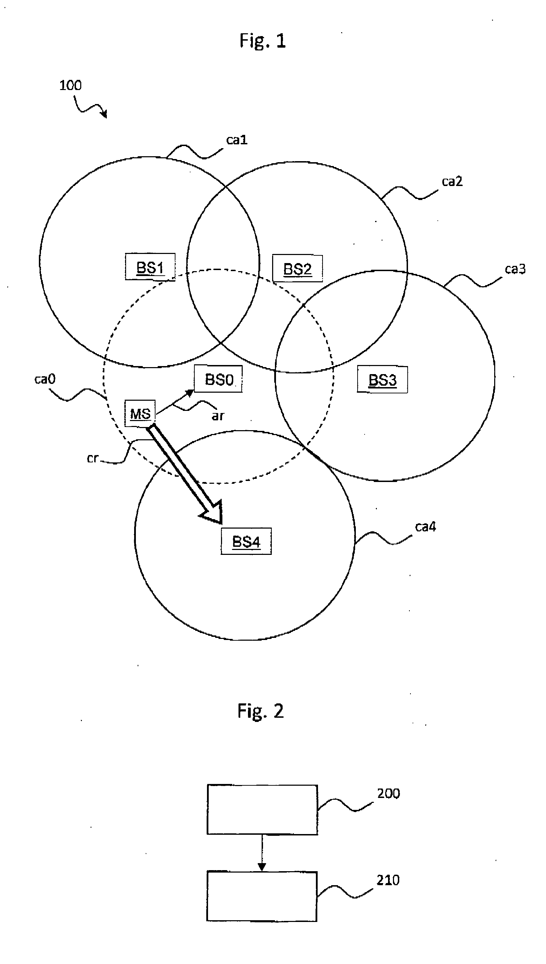

Figure 1 depicts a communications scenario of a cellular communications network 100, which comprises several base stations BS0, BS1, BS2, BS3, BS4. Each of the base stations BS0, BS1, .. provides radio coverage in a per se known manner in an area around its position. The respective area of radio coverage provided by the various base stations BS0, BS1, .. depicted by figure 1 is symbolized by circles ca0, ca1, ca2, ca3, ca4.

In order to save electrical energy, the communications network 100 supports a feature according to which selected base stations BS0 may temporarily deactivate in that they e.g. shut down a radio frequency (RF) front end (not shown) which comprises radio frequency amplifiers and further electrical components which consume considerable amounts of electrical energy when powered on. Such shutdown procedures may e.g. be scheduled for night time or generally for any periods of time, where a reduced radio coverage is acceptable.

As an effect of the base station shutting down, which is exemplarily depicted for the base station BS0 according to figure 1, there is no radio coverage in its surrounding area, which is indicated by a dashed circle ca0. I.e., a terminal MS, which is currently positioned within the neighbourhood of the first base station BS0, cannot receive any downlink synchronisation information from the first base station BS0, because its RF front end is temporarily deactivated to save energy.

In contrast to the deactivated base station BS0, the further base stations BS1, BS2, BS3, BS4 of the communications network 100 are currently activated, cf. their areas of radio coverage ca1, ca2, ca3, ca4. However, due to their respective distance to the mobile station MS, they cannot provide the terminal MS with downlink synchronisation information, either.

As a consequence, at its current position, the mobile terminal MS cannot establish data communications with the cellular communications network 100 by means of conventional approaches, because no downlink synchronisation is provided within its range by a respective base station.

As an example, a conventional approach of establishing communications with the cellular communications network 100 would comprise the mobile terminal MS scanning one or more downlink frequency bands in order to find a strong radio cell by evaluating respective synchronisation information. Once a strong radio cell would have been found, a first estimate of a carrier frequency supported by the respective radio cell or base station, respectively, could be determined by the terminal MS. After that, the terminal MS would look for a primary synchronisation signal, from which it can determine an exact carrier frequency supported by the respective radio cell.

Further steps of a conventional access procedure e.g. would comprise the terminal MS detecting a secondary synchronisation signal, which may e.g. yield a layer one cell ID of the serving radio cell. After that, the mobile terminal MS could read the system information which is broadcast within the respective radio cell on a broadcast channel. From this, the mobile station MS could obtain a Public Land Mobile Network (PLMN) ID. Once the PLMN ID would suit the configuration of a Subscriber Identity Module (SIM) card of the terminal MS, the terminal MS would be ready to register with the specific radio cell. After that, the terminal MS could perform a per se known random access procedure, which comprises sending PRACH preambles at the desired power level. If the preamble is not detected by a base station which provides the radio cell, the terminal MS may increase the preamble transmission power. If the base station is successful in detecting the respective preamble of the terminal MS, this may be indicated on a downlink scheduling channel. After that, user data can be exchanged between the terminal MS and a base station.

However, if at least one of the aforementioned steps of the conventional access procedure, which might e.g. involve the conventional access request ar as indicated by figure 1 from the terminal MS to the base station BS0, is not successful, as in the present case, e.g. due to the first base station BS0 being powered down (sleep mode), no data communications can be established between the terminal MS and the base station BS0 by means of said conventional access procedures ar.

In this case, according to a preferred embodiment, the terminal MS may transmit a coverage request cr, which indicates that said terminal MS requires radio coverage to be established at its current and/or an estimated future position by a base station BS0 of said cellular communications network 100. That is, if the terminal MS e.g. is not successful in establishing data communications with the base station BS0 by means of the access request ar, i.e. by means of conventional approaches, according to the present invention, the terminal MS may issue the inventive coverage request cr which might eventually be picked up by one of the further surrounding base stations BS4 and which notifies said further base station BS4 of the terminal's desire to establish data communications with the cellular communications network 100.

Primarily, the inventive coverage request cr differs from conventional access procedures ar in that it does not require having received synchronisation information prior to being issued by a terminal MS according to the embodiments. The terminal MS may rather issue a coverage request cr whenever a communications link to the network 100 or any other communications network is to be established, but no active cell or base station, BS0, respectively, may be detected, e.g. due to a temporarily deactivated (=sleeping) base station or the like.

A further difference is that the inventive coverage requests primarily aims at triggering a receiving entity (i.e. the remote base station BS4) to initiate one or more procedures which ensure that radio coverage is established at the current position of the requesting terminal MS or at any other position such as e.g. an estimated future position of said terminal MS. I.e., according to an embodiment, the coverage request cr is supposed to trigger establishment of radio coverage in an area, where currently no or no sufficient radio coverage is found.

Upon receiving the coverage request cr from the terminal MS, the further base station BS4 may e.g. contact the sleeping base station BS0 via a backhaul network, which is not depicted in figure 1 for the sake of clarity, thus reactivating the base station BS0. After that, base station BS0 may provide radio coverage within its associated coverage area ca0 in the same way the further base stations provide coverage in their associated coverage areas ca1, ca2, ca3, ca4.

Thus, after powering up the base station BS0, the terminal MS may establish data communications with the base station BS0 by employing the per se known access request ar (or any other known access procedure which requires detection of a radio cell), which is known to the skilled man and which usually depends on the specific type of cellular communications network (GSM, UMTS LTE, LTE-advanced).

Although Fig. 1 depicts the coverage request cr in form of an arrow aiming at BS4, of course, any base station of the network 100 which is capable of receiving the coverage request cr may receive and evaluate it and trigger the measures which are exemplarily explained above with reference to base station BS4.

In order to ensure that the inventive coverage request cr can be received by a comparatively remote base station BS4, according to the embodiments, the coverage request cr is generated according to specific parameters, which may significantly differ from the conventional access request ar.

For instance, when generating the coverage request cr, the terminal MS according to the embodiments may use a higher transmit power as compared to the conventional access request ar, particularly a maximum transmit power supported by the terminal MS.

Moreover, lower code rates as compared to the access request ar as specified by conventional systems, may be employed, particularly by extending existing mother codes by repetition coding, in order to increase the chances that the further base station BS4, which is located comparatively far away from the terminal MS, can successfully receive and evaluate the coverage request cr.

Additionally or alternatively, a higher degree of spreading as compared to the access request ar may also be employed for the inventive coverage request cr to further "harden" it against any noise usually imparted on a signal transmitted via a wireless channel.

Moreover, the coverage request cr can also be limited to a comparatively small bandwidth, preferable a smaller bandwidth as compared to the access request ar, which further increases the chances for the coverage request cr to be recognized by any of the surrounding base stations, which are currently not powered down or in a sleep mode, respectively.

As a further measure, the coverage request cr may also be stretched in time, as compared to the access request ar, particularly by distributing said coverage request cr to a plurality of subsequent transmission time intervals (tti), which also further facilitates successful recovery and evaluation of the coverage request cr at the surrounding base stations.

According to a further embodiment, identification information may also be included within the coverage request cr which enables a receiving base station BS4 to distinguish the terminal MS depending on the contents of the coverage request cr from further devices, which could also issue coverage requests cr according to the embodiments.

According to yet another embodiment, said terminal MS is configured to include location-based information, preferably information on a current position of said terminal MS, in said coverage request cr. For instance, the terminal MS may comprise a global positioning system (GPS) which enables to determine the terminal's position. Such GPS position data may e.g. be included within the coverage request cr, which advantageously enables the base station BS4 that receives the coverage request cr to determine which base station BS0 of the network 100 to wake up for providing additional radio coverage the terminal MS may make use of.

Generally, according to another embodiment, the terminal MS is configured to transmit said coverage request cr if it determines that no, or at least no sufficient, radio coverage is provided for the terminal MS and/or upon request of a user of said terminal MS. Thus, the terminal MS may i.e. automatically resort to the coverage request cr according to the embodiments whenever it has no success in establishing data communications with the base station BS0 according to conventional access procedures, i.e. by employing the access request ar.

Fig. 2 depicts a simplified flow chart of a method according to the embodiments. In a first step 200, the terminal MS determines that no, or at least no sufficient, radio coverage is provided for the terminal MS at its current position. This can e.g. be performed by scanning the air interface for corresponding synchronization signals which are usually sent from a serving base station. In a next step 210, the terminal MS transmits the coverage request cr to initiate a procedure which ensures that radio coverage will be established in near future at its position.

Furthermore, the coverage request cr may also be triggered by a user of the terminal MS, for example in cases of emergency.

According to a further embodiment, for energy efficiency, as much cells as possible, i.e. base stations BS0, BS1, BS2, BS3, BS4 of the communications network 100, can be turned off to save electrical energy. This may e.g. occur when no mobile terminal MS is currently attached to a cell anymore. Exemplary scenarios e.g. may be found during night time, and generally the probability for turning off a radio cell increases in systems with larger cell density, e.g. heterogeneous networks with macro-, micro-, pico- and/or femto- cells.

When turning off the base stations according to an embodiment, it is advantageously taken into account that not a whole large contiguous area shall be completely turned off thus leaving the whole area without radio coverage. In principle, some cells should at least be powered down only to a smaller degree i.e. to a kind of idle mode, wherein power amplifiers of the transmitters can be turned off, but wherein low noise amplifiers of the receivers are still active to be able to receive a coverage request cr of a mobile terminal MS. The distance and scheme according to which base stations are powered down is preferably determined based on the theoretical range of the inventive coverage request cr and is chosen such that - form a statistical point of view - at least one base station BS4 everywhere within the communications network 100 is capable of receiving and evaluating a coverage request cr although several neighbouring base stations BS0, BS1, BS2, BS3 may already be powered down.

If the mobile terminal MS is not able to establish a connection according to the conventional procedures, i.e. by employing the conventional access request ar, it issues one or more coverage requests cr. According to the embodiments, the coverage request cr is highly protected in order to be correctly received even by base stations BS4 which are comparatively far away from the terminal MS and which would thus not be able to receive a conventional access request ar. Generally, one or more, or even all, of the following strategies can be used to provide the increased protection of the coverage request cr:
- high transmit powers,
- low code rates, extending the mother codes of the communications technology / standard regularly used by the network 100 by means of repetition coding,
- spreading of the signal,
- concentrating the signal on a small frequency portion (e.g. one physical resource block (PRB) or a fraction of a PRB) in LTE systems,
- stretching the signal in time over several transmission time intervals (coding over more than one transmission time interval (tti)).

The afore-mentioned aspects advantageously provide for an efficient use of the usually limited transmit power of a mobile station MS in a way to achieve particularly long ranges for the coverage request cr.

In order to identify different coverage request cr from different terminals MS, according to an embodiment, some user-specific or terminal-specific information should be tied to it. This can e.g. be done in an explicit way by sending a user equipment ID within the payload of the coverage request cr (either globally or some reduced form of this), or a relevant identification information may implicitly be provided, i.e. by application of user-specific or terminal-specific scrambling or spreading codes to the coverage request cr.

Optionally, the coverage request cr contains location-based information. E.g., if the terminal MS is equipped with a GPS receiver (not shown), it can transmit its position within the coverage request cr, so that the cellular network 100 is able to better identify which one of the sleeping cells BS0, .. have to be turned on in order to provide adequate radio coverage for the requesting mobile terminal MS. In order to reduce the required data rates for the coverage request cr, the location information does not require to comprise absolute coordinates, such as full GPS coordinates, but could comprise some relative coordinates with a coarse resolution (e.g. 500 meters), e.g. unique for a square of 16 kilometers by 16 kilometers.

According to a further embodiment, the coverage request cr can e.g. be designed in the following way in the context of an LTE system. It is to be noted, that at least one of the features described below or any combination thereof can be used to define the coverage request cr:
- It uses a multiple of the sample rate of the cellular system it wants to support for simplifying the processing.
- It uses a fraction of the bandwidth, e.g. for supporting LTE, a bandwidth of 0.5 MHz with a sampling rate of 0.384 MChip/s could be used.
- It uses the available maximum transmit power (which is justified in cases where the conventional access procedures employing the access request ar fail).
- It uses spreading with a high spreading factor, like 384, giving a spreading gain of 25.8 dB and a symbol duration of 1ms .
- Scrambling (with e.g. Gold codes) may be used in order to improve auto-correlation properties and to implicitly identify the terminal MS by choosing for the terminal MS one out of a predetermined set (e.g. 64 different) of sequences.
- The coverage request cr may contain a small number of payload bits (e.g. for carrying localization or location-based information, terminal ID information, emergency flag and/or further status flags). Those payload bits may be encoded with block coding (e.g., a Reed-Muller-code). The encoded bits may be modulated with differential binary phase shift keying (D-BPSK) and may be spread in the time-domain, using a pulse-shaping filter for limiting the out-of-band emissions (e.g. using a root-raised cosine filter). The D-BPSK modulation allows to skip pilot symbols and additionally helps in detecting the coverage request cr signal at a receiver, e.g. a base station BS4: a coherent (complex-valued) despreading of the D-BPSK symbols can be used and the whole sequence of transmitted symbols can be added up non-coherently (so just energetically by adding up squared absolutes) in order to detect the presence and timing of the coverage request cr.
- If parts of a conventional access procedure have been carried out successfully by the terminal MS (i.e. detecting a primary synchronization signal), a time and frequency position to be used for the coverage request cr may be chosen depending on information gathered thereby.
- If parts of a conventional access procedure have been carried out successfully by the terminal MS (i.e. detecting an estimate carrier frequency), at least a rough positioning in frequency of the coverage request cr is possible.
- Otherwise, the terminal MS may choose a frequency for transmitting the coverage request: by guessing (i.e., arbitrarily choosing), by using one of the frequencies it has used prior to loosing radio coverage.

According to a further embodiment, in order to achieve a better receive signal-to-noise-plus-interference-ratio (SINR) for the coverage request cr, this signal may use approaches beyond the respective currently supported standards (e.g., UMTS, LTE). E.g., if the coverage request cr signal shall be used in cells which are designed for an LTE-system, one or more of the following aspects may be applied:
1) To achieve a higher power spectral density (PSD), than a terminal (UE) can achieve in a regular LTE system, the used bandwidth of the signal is reduced, preferably beyond the usual design limit of LTE. E.g., the minimum amount of bandwidth used for data transmission is one physical resource block (PRB), corresponding to 12 subcarriers, corresponding to 180 kHz. In contrast, according to an embodiment, the coverage request cr may use less bandwidth, e.g. only 90 kHz and thus achieve a higher PSD compared to what is possible with the current LTE standard, as all available transmit power is concentrated in a smaller bandwidth.
2) In order to enable a receiver of the coverage request cr to collect more useful signal parts in time direction, compared to what is possible in the current LTE standard, for the transmission of the coverage request cr, more than one transmission time interval (tti) of LTE may be used. The tti is the maximum duration for transmitting a coded transport block in LTE standard and corresponds to 1 ms. The coverage request cr may advantageously use more than this, e.g. at least 2 ms, and thus stretches carried information with the correspondingly increased code rate and/or repetition/spreading, thus achieving additional coding and power gain over LTE standard transmissions.
   With an exemplary value of 90 kHz bandwidth and 2 ms duration (assuming simple repetition coding), a 4 times higher SINR compared to usual LTE uplink transmissions may be achieved for the coverage request cr. Thus, with a path loss exponent of 3, about 60% range increase over a usual LTE system (with the same receive SINR) is obtained.
   According to an embodiment, at least some base stations BS4 (Fig. 1) of the network 100 should not be deactivated completely to save energy. They may rather be set to an idle mode wherein their receivers are operable, while their transmitters are turned off to save energy. Thus, the idle base stations BS4 are still able to receive coverage requests cr according to the embodiments. For this purpose, according to a further embodiment, at least the idle (i.e., non-turned off) cells or base stations BS4, respectively, should scan their frequencies in order to detect possible coverage requests cr. When scanning the frequencies, the base stations may start in a preferred relative band-position (e.g. around center frequency, like the position of the LTE PRACH preamble), which should be defined by convention/ standardization.

Generally, according to an embodiment, the transmission parameters (transmission power, modulation scheme, frequency, coding) for the coverage request cr should be defined such that high transmission ranges and high robustness versus interference is ensured.

Optionally, in order to reduce the required frequency scanning range at possible receivers of the coverage request cr, there could be some inter-operator support of different networks: Each PLMN just scans its frequencies but informs co-located or neighboring base stations of other PLMN in case a coverage request cr was detected, but no connection could be established with newly turned-on cells BS0 due to unsuiting PLMN IDs. (This could be detected via a time-out functionality.) In other words, the inventive principle of the coverage request cr may also be employed within different communications networks, wherein a network entity of a first network, which receives a coverage request cr, may also notify a network entity BS0 of a second network 100.

According to a further embodiment, once a base station BS4 has detected a coverage request cr, it has to identify which sleeping / idling neighbor cells or base stations, respectively, have to be waked up. If location-based information is included in the coverage request cr, this process is particularly efficient. E.g., a database containing coverage areas of cells and associated base stations BS0, BS1, BS2, BS3, BS4 could be looked up in order to determine which sleeping cell / base station BS0 could offer the best connection for the terminal MS that has sent the coverage request cr.

Without explicitly transmitted location-based information, one further option is to use implicit location information such as direction of arrival (DoA) estimation at a base station BS4 receiving a coverage request cr. Furthermore, a receive power of the coverage request cr at the receiving base station BS4 may also be evaluated. When evaluating implicit location information, precision can be increased by taking into consideration respective data of a plurality of base stations. Additionally or alternatively, relative delay differences and/or received signal power differences between several base stations receiving said coverage request cr may also be taken into account.

According to a further embodiment, base stations BS4 will inform their neighbors BS0, BS1, .. via backhaul (in LTE terminology: using the X2 interface) once they have received a coverage request cr (optionally including implicit localization information, like DoA). If several base stations have detected a specific coverage request cr of a terminal MS, the common sleeping neighbor cells of the several base stations can be identified. E.g., counting the occurrence of common neighbor cells gives an indicator which sleeping cells will provide the best coverage. This could additionally be improved in accuracy when using localization / location-based information.

Generally, there is a trade-off between energy saving within the network and coverage: For better coverage, all potential sleeping base stations which may be able to reestablish radio coverage for a requesting terminal MS can be waked up according to an embodiment. Those base stations, that will not have terminals attached to them after a certain time can shut down once again to save energy. For an increased degree of energy saving, only those sleeping base stations BS0 should be waked up which have the highest number of neighbor cell "coverage request detections".

Once a base station BS0 is turned-on (i.e., waked up), it can provide pilot and control information in a downlink direction, and the terminal MS will be able to connect to the cellular network 100, e.g. by conventional access procedures ar.

According to a further embodiment, the coverage request cr is used for emergency calls, preferably when there is no regular radio coverage at the terminal's position. The coverage request cr may thus also be manually triggered by a user of the terminal MS. The information defining an emergency call is either explicitly contained in the payload bits of the coverage request cr or implicitly, e.g. via a specific scrambling sequence. Optional localization / location-based information will be of high value here.

The detection of a coverage request cr indicating an emergency situation may be performed as with the further coverage requests cr already explained above.

The special design of the coverage request cr gives a high transmission range and thus there is a high probability that the information that an emergency case is there can be passed to a cellular network even when there is no regular radio coverage at the current position of the terminal MS.

Even when there is currently no base station BS0 available which could be turned on for enabling a connection of the terminal MS to the system 100, the information that there is an emergency can be received in form of the specialized coverage request cr indicating said emergency. The optional localization or location-based information (either explicitly contained in the payload of the coverage request cr, or implicitly obtained via DoA and/or power level estimation or other localization methods) will allow to deliver a certain form of help to the estimated place of emergency, i.e. the terminal's position. E.g., in case of mountain terrain around the estimated position of the terminal MS, a helicopter could be sent to the estimated position.

The coverage request cr according to the embodiments advantageously allows to apply comparatively aggressive energy saving schemes to cellular communications networks 100. Whenever a specific position is not supplied with radio coverage due to a sleeping base station BS0, a terminal in that area may request (re-)establishment of radio coverage within said area by means of the coverage request cr according to the embodiments.

The principle of the coverage request cr according to the embodiments is also applicable to mixed systems in which more than one radio communications technology or standard is employed. At least some network entities of either network should be configured to receive and/or evaluate and/or forward the coverage request cr according to the embodiments, so that a corresponding base station BS0 or access point or the like may be activated to provide radio coverage at the terminal's position or an estimated future position of the terminal MS.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Terminal (MS) for a cellular communications network, wherein said terminal (MS) is configured to establish a communications connection with a base station (BS0) of said cellular communications network by transmitting an access request (ar) to said base station (BS0), wherein said terminal (MS) is further configured to transmit (210) a coverage request (cr) which indicates that said terminal (MS) requires radio coverage to be established at its current and/or an estimated future position by a base station (BS0) of said cellular communications network (100).

2. Terminal (MS) according to claim 1, wherein said terminal (MS) is configured to apply at least one of the following measures to the coverage request (cr):
- use a higher transmit power as compared to the access request (ar), particularly a maximum transmit power,
- use lower code rates as compared to the access request (ar), particularly by extending existing mother codes by repetition coding,
- use a higher degree of spreading as compared to the access request (ar),
- limit the coverage request (cr) to a comparatively small bandwidth, preferably a smaller bandwidth as compared to the access request (ar),
- stretch the coverage request (cr) in time, as compared to the access request (ar), particularly by distributing said coverage request (cr) to a plurality of subsequent transmission time intervals.

3. Terminal (MS) according to one of the preceding claims, wherein said terminal (MS) is configured to include information in said coverage request (cr) which enables a receiver of said coverage request (cr) to distinguish said coverage request (cr) from a coverage request and/or further signals of other devices.

4. Terminal (MS) according to one of the preceding claims, wherein said terminal (MS) is configured to include location-based information, preferably information on a current position of said terminal (MS), in said coverage request (cr).

5. Terminal (MS) according to one of the preceding claims, wherein said terminal (MS) is configured to use a multiple of a sample rate supported by the communications network (100) that is supposed to process said coverage request (cr) for generating said coverage request (cr).

6. Terminal (MS) according to one of the preceding claims, wherein said terminal (MS) is configured to transmit (210) said coverage request (cr) if it determines (200) that no, or at least no sufficient, radio coverage is provided for the terminal (MS) and/or upon request of a user of said terminal (MS).

7. Method of operating a terminal (MS) for a cellular communications network, wherein said terminal (MS) is configured to establish a communications connection with a base station (BS0) of said cellular communications network by transmitting an access request (ar) to said base station (BS0), wherein said terminal (MS) transmits (210) a coverage request (cr) which indicates that said terminal (MS) requires radio coverage to be established at its current and/or an estimated future position by a base station (BS0) of said cellular communications network.

8. Method according to claim 7, wherein said terminal (MS) transmits (210) said coverage request (cr) if it determines (200) that no, or at least no sufficient, radio coverage is provided for the terminal (MS) and/or upon request of a user of said terminal (MS).

9. Base station (BS4) of a cellular communications network (100), wherein said base station (BS4) is configured to receive a coverage request (cr) from a terminal (MS) which indicates that said terminal (MS) requires radio coverage to be established at its current and/or an estimated future position by a base station (BS0) of said cellular communications network.

10. Base station (BS4) according to claim 9, wherein said base station (BS4) is configured to wake up and/or notify further base stations (BS0) of the coverage request (cr).

11. Base station (BS4) according to one of the claims 9 to 10, wherein said base station (BS4) is configured to determine at least one further base station (BS0) to be waked up and/or notified of the coverage request (cr) depending on location-based information comprised within said coverage request (cr).

12. Base station (BS4) according to one of the claims 9 to 11, wherein said base station (BS4) is configured to perform an estimation of a direction of arrival of said coverage request (cr) and/or to exchange data related to a received coverage request (cr) with at least one further network element, particularly a neighboring base station (BS3).

13. Method of operating a base station (BS4) of a cellular communications network (100), wherein said base station (BS4) receives a coverage request (cr) from a terminal (MS) which indicates that said terminal (MS) requires radio coverage to be established at its current and/or an estimated future position by a base station (BS0) of said cellular communications network, and wherein said base station (BS4) wakes up and/or notifies further base stations (BS0) of the coverage request (cr).
